(19) Europäisches Patentamt
European Patent Office
Office européen des brevets

(11) **EP 1 153 045 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.[7]: **C08F 8/04**, C08F 8/00

(21) Anmeldenummer: **00903633.6**

(22) Anmeldetag: **26.01.2000**

(86) Internationale Anmeldenummer:
**PCT/EP2000/000576**

(87) Internationale Veröffentlichungsnummer:
**WO 2000/046259 (10.08.2000 Gazette 2000/32)**

(54) **VERFAHREN ZUR HYDRIERUNG AROMATISCHER POLYMERE IN GEGENWART SPEZIELLER KATALYSATOREN**

METHOD FOR HYDROGENATING AROMATIC POLYMERS IN THE PRESENCE OF SPECIAL CATALYSTS

PROCEDE D'HYDROGENATION DE POLYMERES AROMATIQUES SPECIAUX EN PRESENCE DE CATALYSEURS

(84) Benannte Vertragsstaaten:
**AT BE CH CY DE DK ES FI FR GB GR IE IT LI LU MC NL PT SE**

(30) Priorität: **05.02.1999 DE 19904612**

(43) Veröffentlichungstag der Anmeldung:
**14.11.2001 Patentblatt 2001/46**

(73) Patentinhaber:
• **Bayer MaterialScience AG**
**51368 Leverkusen (DE)**
• **TEIJIN LIMITED**
**Osaka-shi Osaka 541-0054 (JP)**

(72) Erfinder:
• **WEGE, Volker**
**D-47799 Krefeld (DE)**

• **DOUZINAS, Konstadinos**
**D-51061 Köln (DE)**
• **RECHNER, Johann**
**D-47906 Kempen (DE)**

(74) Vertreter: **Klimiuk, Meike**
**Bayer AG,**
**Konzernbereich RP**
**Patente und Lizenzen**
**51368 Leverkusen (DE)**

(56) Entgegenhaltungen:
**EP-A- 0 378 104        EP-A- 0 814 098**
**GB-A- 2 011 911**

**Beschreibung**

Gegenstand der Erfindung ist ein Verfahren zur Hydrierung aromatischer Polymere, welches dadurch gekennzeichnet ist, daß Metalle der VIII. Nebengruppe zusammen mit einem Träger aus Aluminiumoxid vorliegen. Die Katalysatoren besitzen eine spezielle Porengrößenverteilung. Dadurch lassen sich aromatische Polymere bezüglich ihrer aromatischen Einheiten vollständig und ohne signifikanten Abbau der Molekulargewichte hydrieren.

Die Hydrierung aromatischer Polymere ist bereits bekannt. DE-AS 1 131 885 beschreibt die Hydrierung von Polystyrol in Gegenwart von Katalysatoren und Lösungsmittel. Als Lösungsmittel werden aliphatische und cycloaliphatische Kohlenwasserstoffe, Ether, Alkohole und aromatische Kohlenwasserstoffe erwähnt. Als bevorzugt wird ein Gemisch aus Cyclohexan und Tetrahydrofuran genannt. Siliziumdioxid und Aluminiumoxidträger der Katalysatoren werden allgemein erwähnt, deren physikalisch chemische Struktur wird jedoch nicht beschrieben.

EP-A-322 731 beschreibt die Herstellung von vorwiegend syndiotaktischen Polymeren auf Basis von Vinylcyclohexan, wobei ein Styrol-basierendes Polymer in Gegenwart von Hydrierungskatalysatoren und Lösungsmitteln hydriert wird. Als Lösungsmittel werden cycloaliphatische und aromatische Kohlenwasserstoffe, nicht jedoch Ether, erwähnt.

Die in DE 196 24835 (= EP-A 814 098) zur Hydrierung von Polymeren mit Ruthenium- oder Palladiumkatalysatoren, bei denen das Aktivmetall auf einem porösen Träger aufgebracht ist, beschreibt die Hydrierung von olefinischen Doppelbindungen von Polymeren.

Aromatische Bereiche werden zu weniger als 25 % und im allgemeinen in einem Bereich von 0 bis ungefähr 7 % hydriert. Die Auswahl der Lösungsmittel ist dabei nicht kritisch.

Femer ist bekannt (WO 96/34896 = US-A-5,612,422), daß kleine Porendurchmesser (200-500 Å) und große Oberflächen (100-500 m$^2$/g) von Siliziumdioxid unterstützten Katalysatoren bei der Hydrierung von aromatischen Polymeren zu unvollständiger Hydrierung und zu Abbau der Polymerkette führen können. Die Verwendung spezieller Siliziumdioxid unterstützter Hydrierkatalysatoren (WO 96/34896) lassen eine annähernd vollständige Hydrierung bei ca. 20 % igem Abbau der Molekulargewichte zu. Die genannten Katalysatoren weisen eine spezielle Porengrößenverteilung des Siliziumdioxids auf, die dadurch charakterisiert ist, daß 98 % des Porenvolumens einen Porendurchmesser größer 600 Å haben. Die genannten Katalysatoren haben Oberflächen zwischen 14-17 m$^2$/g und mittlere Porendurchmesser von 3800-3900 Å. Verdünnte Polystyrollösungen in Cyclohexan mit einer Konzentration zwischen 1% bis maximal 8 % werden zu Hydriergraden größer 98 % und kleiner 100 % hydriert.

Die in den genannten Schriften beschriebenen Beispiele zeigen bei Polymerkonzentrationen kleiner 2 % einen Abbau der absoluten Molekulargewichte des hydrierten Polystyrols. Generell führt Molekulargewichtsabbau zu einer Verschlechterung der mechanischen Eigenschaften eines hydrierten Polystyrols.

Das Vergleichbeispiel gemäß WO 96/34896 eines kommerziell verfügbaren Katalysators 5 % Rh/Al$_2$O$_3$, (Engelhard Corp., Beachwood, Ohio, USA) führt zu einem Hydriergrad von 7 % und zeigt die geringere Aktivität des Aluminiumoxidträgers gegenüber dem Siliziumdioxid unterstützten Katalysator.

Überraschenderweise wurde nun gefunden, daß bei der Verwendung spezieller Katalysatoren, welche Metalle der VIII. Nebengruppe zusammen mit einem Träger aus Aluminiumoxid, wobei der Katalysator dadurch definiert ist, daß höchstens 10 % des Porenvolumens einen Porendurchmesser kleiner 600 Å aufweisen, einen mittleren Porendurchmesser von größer 1000 Å, eine Oberfläche von größer 3 m$^2$/g besitzen und eine bestimmte Porengrößenverteilung aufweisen, aromatische Polymere vollständig und ohne signifikanten Abbau der Molekulargewichte hydrieren.

Gegenstand der Erfindung ist ein Verfahren zur Hydrierung aromatischer Polymere in Gegenwart von Katalysatoren, wobei der Katalysator ein Metall oder Gemisch von Metallen der VIII. Nebengruppe des Periodensystems zusammen mit einem Träger aus Aluminiumoxid ist und das Porenvolumen der Porendurchmesser des Katalysators zwischen 1000 - 10000 Å, gemessen nach der Quecksilber-Porosimetrie, und 90 - 20 %, bevorzugt 80 - 25 % % und, insbesondere 70 bis 30 %, bezogen auf das gesamte Porenvolumen, gemessen nach der Quecksilber-Porosimetrie, beträgt.

Der mittlere Porendurchmesser beträgt, bestimmt nach Quecksilber-Porosimetrie, größer 1000 Å.

Die Quecksilbermethode ist jedoch nur hinreichend genau für Poren, die größer als 60 Å sind. Porendurchmesser kleiner 600 Å werden daher durch Stickstoffsorption nach Barret, Joyner, Halenda bestimmt (DIN 66 134).

Die Katalysatoren weisen ein Porenvolumen, gemessen nach der Stickstoffsorption von kleiner 10 %, bevorzugt kleiner 5 %, für Porendurchmesser kleiner 600 Å auf. Das Porenvolumen, gemessen nach der Stickstoffsorption, bezieht sich auf das gesamte Porenvolumen, gemessen nach der Quecksilber-Porosimetrie.

Die Bestimmung des mittleren Porendurchmessers und der Porengrößenverteilung erfolgt durch Quecksilber-Porosimetrie gemäß DIN 66 133.

Der mittlere Porendurchmesser beträgt im allgemeinen 1000 Å bis 10000 Å, vorzugsweise 2000 Å bis 7000 Å, ganz besonders bevorzugt 2500 Å bis 6000 Å .

Methoden zur Charakterisierung von Hydrierkatalysatoren werden z.B. in WO 96/34896 (=US-A-5,612,422) und Applied Heterogenous Catalysis, Institute Francais du Petrole Publication, Seite 189-237 (1987) beschrieben.

Die Katalysatoren bestehen aus Metallen der VIII. Nebengruppe, welche zusammen mit einem Träger aus Aluminiumoxid vorliegen.

Aluminiumoxide mit der allgemeinen Summenformel $Al_2O_3$ treten in verschiedenen Modifikationen auf. Man unterscheidet zum Beispiel das hexagonale $\alpha$-$Al_2O_3$ und das kubisch flächenzentriertkristallisierte $\gamma$-$Al_2O_3$. Unter $\beta$-$Al_2O_3$ versteht man eine Gruppe von Aluminiumoxiden, die kleine Mengen Fremd-Ionen im Kristallgitter enthalten. Es existieren weitere spezielle Modifikationen sowie zahlreiche Übergangsformen zwischen den Aluminiumhydroxiden und Aluminiumoxiden.

Die Oberfläche des Katalysators wird nach BET (Brunauer, Emmett und Teller) Verfahren durch Stickstoff Adsorption, gemäß DIN 66 131 und DIN 66132 bestimmt.

Die spezifischen Stickstoff-Oberflächen (BET) betragen im allgemeinen größer 3 $m^2$/g, bevorzugt 5 $m^2$/g bis 80 $m^2$/g, besonders bevorzugt 8 $m^2$/g bis 60 $m^2$/g.

Verwendet werden im allgemeinen Metalle der VIII. Nebengruppe, vorzugsweise Nickel, Platin, Ruthenium, Rhodium, Palladium, ganz besonders bevorzugt Platin und Palladium.

Der Metallgehalt beträgt, bezogen auf das Gesamtgewicht des Katalysators, im allgemeinen 0,01 bis 80 %, vorzugsweise 0,05 bis 70 %.

Der 50 % Wert der kumulativen Verteilung der Partikelgröße beträgt im diskontinuierlich betriebenen Prozeß im allgemeinen 0.1 $\mu$m bis 200 $\mu$m, vorzugsweise 1 $\mu$m bis 100 $\mu$m, ganz besonders bevorzugt 3 $\mu$m bis 80 $\mu$m.

Übliche Lösungsmittel für Hydrierreaktionen sind aliphatische oder cycloaliphatische Kohlenwasserstoffe, aliphatische oder cycloaliphatische gesättigte Ether oder deren Gemische, z.B. Cyclohexan, Methylcyclopentan, Methylcyclohexan, Ethylcyclohexan, Cyclooctane, Cycloheptan, Dodecan, Dixoan, Diethylenglycoldimethylether, Tetrahydrofuran, Isopentan, Decahydronaphthalin.

Werden aliphatische oder cycloaliphatische Kohlenwasserstoffe als Lösungsmittel verwendet, so enthalten diese vorzugsweise Wasser in einer Menge im allgemeinen von 0,1 ppm bis 500 ppm, vorzugsweise 0,5 ppm bis 200 ppm, ganz besonders bevorzugt 1 ppm bis 150 ppm, zum gesamten Lösungsmittel.

Das erfindungsgemäße Verfahren führt im allgemeinen zu einer praktisch vollständigen Hydrierung der aromatischen Einheiten. Der Hydriergrad beträgt $\geq$ 99 % bis 100 %. Der Hydriergrad läßt sich beispielsweise durch NMR oder UV-Spektroskopie bestimmen. Das erfindungsgemäße Verfahren fährt ganz besonders bevorzugt zu hydrierten aromatischen Polymeren, insbesondere zu Polyvinylcyclohexan, wobei die Menge an Diaden mit syndiotaktischer Konfiguration größer 50,1 % kleiner 74 %, insbesondere 52 bis 70 %, beträgt.

Als Ausgangsstoffe werden aromatische Polymere eingesetzt, welche beispielsweise ausgewählt sind aus gegebenenfalls im Phenylring oder an der Vinylgruppe substituiertem Polystyrol oder Copolymere davon mit Monomeren, ausgewählt aus der Gruppe der Olefine, (Meth)acrylate oder Gemische davon. Weitere geeignete Polymere sind aromatische Polyether insbesondere Polyphenylenoxid, aromatische Polycarbonate, aromatische Polyester, aromatische Polyamide, Polyphenylene, Polyxylylene, Polyphenylenvinylene, Polyphenylenethinylene, Polyphenylensulfide, Polyaryletherketone, aromatische Polysulfone, aromatische Polyethersulfone, aromatische Polyimide sowie deren Mischungen, Copolymere, gegebenenfalls Copolymere mit aliphatischen Verbindungen.

Als Substituenten im Phenylring kommen $C_1$-$C_4$-Alkyl, wie Methyl, Ethyl, $C_1$-$C_4$-Alkoxy, wie Methoxy, Ethoxy, ankondensierte Aromaten, die über ein Kohlenstoffatom oder zwei Kohlenstoffatome mit dem Phenylring verbunden sind, mit Phenyl, Biphenyl, Naphthyl in Frage.

Als Substituenten an der Vinylgruppe kommen $C_1$-$C_4$-Alkyl, wie Methyl, Ethyl, n-oder iso-Propyl in Frage, insbesondere Methyl in $\alpha$-Position.

Als olefinische Comonomere kommen Ethylen, Propylen, Isopren, Isobutylen Butadien, Cyclohexadien, Cyclohexen, Cyclopentadien, gegebenenfalls substituierte Norbomene, gegebenenfalls substituierte Dicyclopentadiene, gegebenenfalls substituierte Tetracyclododecene, gegebenenfalls substituierte Dihydrocyclopentadiene,

$C_1$-$C_8$-, vorzugsweise $C_1$-$C_4$-Alkylester der (Meth)acrylsäure, vorzugsweise Methyl- und Ethylester

$C_1$-$C_8$-, vorzugsweise $C_1$-$C_4$-Alkylether des Vinylalkohols, vorzugsweise Methyl und Ethylether,

$C_1$-$C_8$-, vorzugsweise $C_1$-$C_4$-Alkylester des Vinylalkohols, vorzugsweise Vinylacetat,

Derivate der Maleinsäure, vorzugsweise Maleinsäureanhydrid, Derivate des Acrylnitrils, vorzugsweise Acrylnitril und Methacrylnitril in Frage.

Bevorzugte Polymere sind Polystyrol, Polymethylstyrol, Copolymere aus Styrol und mindestens einem weiteren Monomer, ausgewählt aus der Gruppe bestehend aus $\alpha$-Methylstyrol, Butadien, Isopren, Acrylnitril, Methylacrylat, Methylmethacrylat, Maleinsäureanhydrid und Olefine wie beispielsweise Ethylen und Propylen. In Frage kommen beispielsweise Copolymere aus Acrylnitril, Butadien und Styrol, Copolymere aus Acrylester, Styrol und Acrylnitril, Copolymere aus Styrol und $\alpha$-Methylstyrol und Copolymere aus Propylen, Dien und Styrol.

Die aromatischen Polymere haben im allgemeinen Molekulargewichte (Gewichtsmittel) $\overline{M}$w von 1000 bis 10,000,000, vorzugsweise von 60000 bis 1000000, besonders bevorzugt 70000 bis 600000, insbesondere 70 000 bis 480 000, bestimmt durch Lichtstreuung.

Die Polymere können eine lineare Kettenstruktur besitzen als auch durch Co-Einheiten Verzweigungsstellen aufweisen (z.B. Propfcopolymere). Die Verzweigungszentren beinhalten z.B. sternförmige Polymere oder andere geometrische Formen der primären, sekundären, tertiären, ggf. quartären Polymerstruktur.

Die Copolymere können sowohl statistisch, alternierend als auch als Blockcopolymere vorliegen.

Blockcopolymere beinhalten Di-Blöcke, Tri-Blöcke, Multi-Blöcke und sternförmige Blockcopolymere.

Die Ausgangspolymere sind allgemein bekannt (z.B. WO 94/21694).

Die einzusetzende Menge an Katalysator ist beispielsweise in WO 96/34896 beschrieben.

Die einzusetzende Menge des Katalysators hängt von dem auszuführenden Prozeß ab; dieser kann kontinuierlich, halb-kontinuierlich oder diskontinuierlich durchgeführt werden.

Im kontinuierlichen System ist die Reaktionszeit wesentlich kürzer; sie wird von den Abmessungen des Reaktionsgefäßes beeinflußt. Bei der kontinuierlichen Abeitsweise sind das Rieselsystem und das Sumpfsystem, beide mit fest angeordneten Katalysatoren, ebenso möglich wie ein System mit suspendiertem und z.B. im Kreis geführten Katalysator. Die festangeordneten Katalysatoren können in Tablettenform oder als Extrudate vorliegen.

Die Polymerkonzentrationen, bezogen auf das Gesamtgewicht aus Lösungsmittel und Polymer betragen im diskontinuierlichen Prozeß im allgemeinen 80 bis 1, vorzugsweise 50 bis 10, insbesondere 40 bis 15 Gew.-%.

Die Reaktion wird im allgemeinen bei Temperaturen zwischen 0 und 500°C, vorzugsweise zwischen 20 und 250°C, insbesondere zwischen 60 und 220°C, durchgeführt.

Die Reaktion wird im allgemeinen bei Drücken von 1 bar bis 1000 bar, vorzugsweise 20 bis 300 bar, insbesondere 40 bis 200 bar, durchgeführt.

Der Palladium-Katalysator kann bei vergleichbarer Aktivität sowohl reduziert als auch unreduziert in der betreffenden Reaktion eingesetzt werden. Für ein technisches Verfahren ist es weitaus günstiger den Katalysator unreduziert einzusetzen und keinen zusätzlichen teuren Reduktionsschritt des Katalysators wie in WO 96/34 896 durchzuführen.

**Beispiele:**

Durch Lichtstreuung werden die absoluten Molgewichte Mw (Gewichtsmittel) des Ausgangspolymers und des hydrierten Produktes bestimmt. Membranosmose liefert die absoluten Molekulargewichte $\overline{M}n$ (Zahlenmittel). In dem Beispiel 2 entspricht der relative Wert $\overline{M}_w$ der GPC-Messung (Gel-Permeations-Chromatographie, Tetrahydrofuran als Elutionsmittel) gegenüber Polystyrolstandards den ermittelten absoluten Molekulargewichten des eingesetzten Polystyrols.

**Beispiele 1 und 2**

Die in den Beispielen verwendeten Katalysatoren sind in Tabelle 1 charakterisiert.

Ein 11-Autoklave wird mit Inertgas gespült. Die Polymerlösung und gegebenenfalls der unreduzierte Katalysator werden zugegeben (Tabelle 2). Nach dem Verschließen wird mehrmals mit Schutzgas, dann mit Wasserstoff beaufschlagt. Nach dem Entspannen wird der jeweilige Wasserstoffdruck eingestellt und der Ansatz unter Rühren auf die entsprechende Reaktionstemperatur geheizt. Der Reaktionsdruck wird nach Einsetzen der Wasserstoffaufnahme konstant gehalten.

Die Reaktionszeit ist die Zeit vom Aufheizen des Ansatzes bis zur vollständigen Hydrierung des Polystyrols beziehungsweise die Zeit bis die Wasserstoffaufnahme ihrem Sättigungswert zustrebt.

Nach beendeter Reaktion wird die Polymerlösung filtriert. Das Produkt wird in Methanol gefällt und getrocknet. Das isolierte Produkt zeigt die in der Tabelle aufgeführten physikalischen Eigenschaften.

**Tabelle 1**: Physikalische Charakterisierung der eingesetzten Katalysatoren

| Katalysator-Nr. | Stickstoff-Porenvolumen für Porenduchmesser von < 600 Å | Gesamtes Quecksilber-Porenvolumen für Porendurchmesser von 38 Å - 15 μm | Quecksilber-Porenvolumen für Porendurch-messer von 1000 Å – 10000 Å | $N_2$ Porenvolumen für Porendurch-messer von < 600 Å / gesamtes Quecksilber Poren-volumen | Porenvolumen für Porenduchmesser 1000 Å - 10000 Å/ gesamtes Quecksil-ber Porenvolumen (38 Å-15 μm) | mittlere Poren durchmesser[1] | spezifische Gesamt-ober-fläche (BET)[2] | Metall-gehalt |
|---|---|---|---|---|---|---|---|---|
| | $mm^3/g$ | $mm^3/g$ | $mm^3/g$ | % | % | Å | $m^2/g$ | % |
| 1 | 32 | 767 | 480 | 4 | 63 | 2722 | 11,9 | 0,5 |

Katalysator: Engelhard De Meern, Niederlande, C 586-102, Palladium auf Aluminiumoxid

1) mittlere Porendurchmesser, gemessen nach Quecksilber Porosimetrie (DIN 66133)

2) spezifische Stickstoff Gesamtoberfläche nach Brunauer, Emmett und Teller (BET, DIN 66131, DIN 66132)

EP 1 153 045 B1

## Tabelle 2

Hydrierung von Polystyrol in Abhängigkeit des Katalysators, Lösungsmittelsystems und der Reaktionstemperatur

| Beispiel-Nr. | Katalysator | Polymer Masse g | Lösungs-Mittel[3] ml | Katalysator Masse g | Reaktions-Temperatur °C | $H_2$-Druck Bar | Reaktions-zeit min | Hydrier-grad[4] % | Tg (DSC) °C | Mw $10^3$ g/mol |
|---|---|---|---|---|---|---|---|---|---|---|
| 1 Vergleich US-A 5612422 | 5 % $Pt/SiO_2$ | 200[1] $\bar{M}_w \sim$ 200000 g mol$^{-1}$ | 2300 CH | 13,5 | 150 | 875 (psig) | 110 | 98,4 | 146,6 | - |
| 2 erfindungs-gemäß | 0,5 % $Pd/Al_2O_3$ [5] | 100,2 [2] | 300 CYH | 12,5 | 200 | 100 | 130 | 100 | 147 | 171 |

[1]  Polystyrol ($\bar{M}$w ~ 200.000 g mol$^{-1}$)

[2]  Polystyrol Type 158 k, $\bar{M}$w = 280.000 g/mol, BASF AG, Ludwigshafen, Deutschland

[3]  CYH = Cylcohexan

4)  Ermittelt durch $^1$H-NMR Spektroskopie

[5]  Engelhard De Meern, Niederlande, Palladium auf Aluminiumoxid, C 586-102

Der Platin-Katalysator (Tabelle 2), der dadurch charakterisiert ist, daß 98 % des Porenvolumens einen Porendurchmesser größer 600 Å aufweist, hydriert Polystyrol bei 150°C nach 110 min nicht vollständig. (98,4 % Vergleichsbeispiel 1).

Der Platin-Katalysator gemäß Beispiel 5 aus US-A 5 612 422 führt zu einem ca. 20 %igen Abbau der Molekulargewichte $\overline{M}_w$.

Molekulargewichtsabbau führt insbesondere zu einer Verkleinerung des mittleren Molekulargewichts $\overline{M}_w$ (US-A 5 612 422). Die erfindungsgemäße Hydrierung in Gegenwart des Aluminiumoxid Katalysators zeigt überraschenderweise auch bei hohen Reaktionstemperaturen keinen signifikanten Abbau des absoluten Molekulargewichts $\overline{M}_w$.

Das absolute mittlere Molekulargewicht $\overline{M}_w$ des hydrierten Produkts entspricht im Rahmen der Meßgenauigkeit dem Wert des eingesetzten Polystyrols.

Der spezielle Aluminiumoxid Katalysator der vorliegenden Erfindung zeigt gegenüber Vergleichsbeispiel 1 eine vergleichbare Reaktionszeit jedoch bei gleichzeitiger vollständiger Hydrierung, bei höherem Molekulargewicht des eingesetzten Polystyrols und höherer Polymerkonzentration.

Der Katalysator zeichnet sich durch eine 10-fach niedrigere Gewichtsmenge des Edelmetalls aus, welches zu einer signifikanten Reduktion der Rohstoffkosten führt und damit die Wirtschaftlichkeit des Hydrierverfahrens verbessert.

**Patentansprüche**

1. Verfahren zur Hydrierung aromatischer Polymere in Gegenwart von Katalysatoren, wobei als Katalysator ein Metall oder Gemisch von Metallen der VIII. Nebengruppe des Periodensystems zusammen mit einem Träger aus Aluminiumoxid eingesetzt wird und das Porenvolumen der Porendurchmesser des Katalysators zwischen 1000 - 10000 Å, gemessen nach der Quecksilber-Porosimetrie, 90-20 %, bezogen auf das gesamte Porenvolumen, gemessen nach der Quecksilber-Porosimetrie, beträgt und der Hydriergrad der Polymer 99 bis 100% beträgt.

2. Verfahren gemäß Anspruch 1, wobei das Porenvolumen 80 bis 25 %, bezogen auf das gesamte Porenvolumen, beträgt.

3. Verfahren gemäß Anspruch 2, wobei das Porenvolumen 70 bis 30 %, bezogen auf das gesamte Porenvolumen, beträgt.

4. Verfahren gemäß einem oder mehreren der vorhergehenden Ansprüche, wobei die Katalysatoren ein Porenvolumen, gemessen nach der Stickstoffsorption von kleiner 10 % für Porendurchmesser kleiner 600Å aufweisen.

5. Verfahren gemäß einem oder mehreren der vorhergehenden Ansprüche, wobei die Metalle ausgewählt sind aus Nickel, Platin, Ruthenium, Rhodium und Palladium.

6. Verfahren gemäß einem oder mehreren der vorhergehenden Ansprüche, wobei das Verfahren in Gegenwart von für Hydrierreaktionen verwendbaren Lösungsmittel durchgeführt wird.

7. Verfahren gemäß einem oder mehreren der vorhergehenden Ansprüche, wobei der Katalysator eine Oberfläche größer 5 m$^2$/g aufweist.

**Claims**

1. A process for the hydrogenation of aromatic polymers in the presence of catalysts, wherein a metal or a mixture of metals of subgroup VIII of the periodic table, together with a support comprising alumina, is used as a catalyst, and the pore volume corresponding to the pore diameter of the catalyst between 1000 and 10,000 A, as measured by mercury porosimetry, is 90 - 20 % with respect to the total pore volume as measured by mercury porosimetry, and the degree of hydrogenation of the polymer is 99 to 100 %.

2. A process according to claim 1, wherein the pore volume is 80 to 25 % with respect to the total pore volume.

3. A process according to claim 2, wherein the pore volume is 70 to 30 % with respect to the total pore volume.

4. A process according to one or more of the preceding claims, wherein the catalysts have a pore volume, as measured by nitrogen sorption, of less than 10 % for pore diameters less than 600 Å.

5. A process according to one or more of the preceding claims, wherein the metals are selected from nickel, platinum, ruthenium, rhodium and palladium.

6. A process according to one or more of the preceding claims, wherein the process is conducted in the presence of solvents which can be used for hydrogenation reactions.

7. A process according to one or more of the preceding claims, wherein the catalyst has a specific surface greater than 5 m$^2$/g.

**Revendications**

1. Procédé d'hydrogénation de polymères aromatiques en présence de catalyseurs, dans lequel un métal ou un mélange de métaux du sous-groupe VIII de la classification périodique des éléments est utilisé avec un support en alumine, le volume poreux des diamètres des pores du catalyseur compris entre 1 000 et 10 000 Å, déterminé par porosimétrie au mercure, atteignant 90 à 20 % par rapport au volume poreux global, déterminé par porosimétrie au mercure et le degré d'hydrogénation des polymères atteignant 99 à 100 %.

2. Procédé selon la revendication 1, **caractérisé en ce que** le volume poreux atteint 80 à 25 % par rapport au volume poreux global.

3. Procédé selon la revendication 2, **caractérisé en ce que** le volume poreux atteint 70 à 30 % par rapport au volume poreux global.

4. Procédé selon une ou plusieurs des revendications précédentes, dans lequel les catalyseurs présentent un volume poreux, déterminé par sorption d'azote, inférieur à 10 % pour les diamètres de pores inférieurs à 600 Å.

5. Procédé selon une ou plusieurs des revendications précédentes, dans lequel les métaux sont sélectionnés parmi le nickel, le platine, le ruthénium, le rhodium et le palladium.

6. Procédé selon une ou plusieurs des revendications précédentes, qui est réalisé en présence de solvants utilisables pour les réactions d'hydrogénation.

7. Procédé selon une ou plusieurs des revendications précédentes, dans lequel le catalyseur présente une surface supérieure à 5 m$^2$/g.